# NEW EUROPEAN PATENT SPECIFICATION

(11) **EP 0 252 472 B2**
(45) Date of publication and mention of the opposition decision: **14.12.1994**
(45) Mention of the grant of the patent: 31.10.1990
(21) Application number: 87109701.0
(22) Date of filing: 06.07.1987
(51) Int. Cl.: B01J 20/04

(54) **Packing material for liquid chromatography and process for producing the same**
Füllungsmaterial für Flüssigkeitschromatographie und Verfahren zu dessen Herstellung
Matériau de garnissage pour chromatographie en phase liquide et son procédé de production

(30) Priority: 05.07.1986 JP 158410/86
(43) Date of publication of application: 13.01.1988
(73) Proprietor: ASAHI KOGAKU KOGYO KABUSHIKI KAISHA, Tokyo 174 (JP)
(72) Inventor: Ichitsuka,Takeshi Asahi Kogaku Kogyo K.K., Tokyo (JP); Ogawa, Tetsuro Asahi Kogaku Kogyo K.K., Tokyo (JP); Sumita, Masaya Asahi Kogaku Kogyo K.K., Tokyo (JP); Yokoo, Akihiko Asahi Kogaku Kogyo K.K., Tokyo (JP); Kawamura, Katsumi Asahi Kogaku Kogyo K.K., Tokyo (JP)
(74) Representative: Hansen, Bernd, Dr. Dipl.-Chem.

(56) References cited:
- EP-A- 0 026 090
- WO-A-86/03733
- US-A- 4 097 935
- NATIONAL TECHN. INFORM. SERV., U.S. Department of Commerce, U.S. Government Printing Office, 1983-381-936/6; "Manufacture of porous apatite moldings"
- BIOINDUSTRY Vol. 2, No.9, 1985, pp.760-763
- Europ. Journ. Biochem, Vol. 157, No.2, 1986. pp. 291-295

## Description

### Field of the Invention

The present invention relates to a packing material for liquid chromatography used in separating and purifying proteins, enzymes, nucleic acids, etc., as well as a process for producing such a packing material.

### Background of the Invention

Packing materials for liquid chromatography have conventionally been prepared from silica gel, chemically modified silica gel, synthetic high-molecular weight gels, natural high-molecular weight gels, carbon gel, etc. Porous packing materials are also known and have been prepared from porous silica, chemically modified porous silica porous polymers, etc.

Calcium phosphate based compounds, in particular synthetic hydroxyapatite, (Caᵢₒ(PO₄.)₆(OH)₂), have the same composition as the inorganic main components of teeth and bones, and, taking advantage of its superior biocompatibility, artificial dental roots or bone prosthetic materials made of synthetic hydroxyapatite have been developed. Attempts have been made for many years to produce packing materials for liquid chromatography from such hydroxyapatite, which is closely related to the living body. In recent years, packing materials that are characterized either by the process of their production or by their shape have been proposed, as described for example, in unexamined published Japanese Patent Application No. 143762/1985. Packing materials based on hydroxyapatite have both cation and anion exchanging properties, and work in a normal-phase mode in analysis of substances such as glycosides. Therefore, hydroxyapatite based packing materials are versatile in that a single column packed with them can be used in a broad range of applications.

One problem with the prior art hydroxyapatite based packing materials is that they do not have sufficiently high pressure resistance to allow for rapid passage of a mobile phase, with subsequent difficulty in separating large volumes of a sample within a short period of time. As a further problem, the conventional hydroxyapatite based packing materials are highly soluble, so if a mobile phase is caused to flow over an extended period, the surface of the packing material dissolves to cause deterioration of its separating performance (i.e., resolution). Furthermore, the fine particles of hydroxyapatite resulting from the dissolved surface of the packing material will tend to block the passage of the mobile phase and clog the column filter, thereby rendering it no longer usable.

### Summary of the Invention

An object, therefore, of the present invention is to provide a packing material for liquid chromatography that has high resolution and exhibits superior resistance to pressure and dissolution.

Another object of the present invention is to provide a process for producing such a packing material.

One aspect of the present invention is a packing material for liquid chromatography that is composed of porous calcium phosphate based granules having open pores with an average pore size of 3 am, said granules being composed of crystalline particles with an average size (average diameter) of 2 µm.

Another aspect of the present invention is a process for producing the packing material for liquid chromatography that comprises mixing a slurry containing calcium phosphate based particles with pyrolyzable particles having an average size of from 0.02 to 30 am, granulating the mixture by spray drying, and firing the granulation at 900-1,400°C to cause complete combustion of the pyrolyzable particles.

Still another aspect of the present invention is a process for producing the packing material for liquid chromatography that comprises providing a slurry containing calcium phosphate based particles, adding a blowing agent to the slurry to form bubbles having an average size of from 0.02 to 30µm, drying the foam to make a porous material, grinding the porous material into granules, and firing the granules at from 900 to 1,400 ° C.

### Brief Description of the Drawings

Fig. 1 is an electron micrograph (x 100) showing the structure of a granule in the packing material prepared in the Example 1 of the present invention; and
Fig. 2 is an electron micrograph showing the structure of the same particle, but at a higher magnification (x 5,400).

### Detailed Description of the Invention

It is known that packing materials for liquid chromatography are generally in the form of porous granules so that they have large enough specific surface areas to achieve contact with as high volumes of samples as possible. Hydroxyapatite based packing materials can also be provided with a greater ability to separate proteins or enzymes if they are formed as porous granules. A convenient method for preparing porous hydroxyapatite granules is spray drying, in which a hydroxyapatite slurry synthesized by a conventional wet method is sprayed into an air stream at from 80 to 250 _{°} C to form porous granules having a size (diameter) of from 2 to 150 am. which are then fired at from 500 to 700 °C, to provide a packing material having improved resolution and pressure resistance. A column packed with this packing material can be satisfactorily used in liquid chromatography under commonly employed operating conditions. However, in liquid chromatography intended for industrial separation and purification, more pressure resistance and durability are sometimes required in order to achieve processing of the desired sample in larger volumes.

In order that hydroxyapatite granules will have not only a greater pressure resistance, or strength, but also enhanced resistance to dissolution, they may be fired at elevated temperatures to permit sufficient growth of crystalline particles. However, if the firing temperature is simply elevated, voids between crystalline particles will be lost and the hydroxyapatite granules change from the porous to dense state to become deteriorated in their separating performance.

Therefore, an important object of the present invention is to improve the resistance to pressure and dissolution of porous hydroxyapatite granules by firing them at elevated temperatures without sacrificing their porosity. This aspect of the present invention is hereinafter described more specifically.

In addition to the hydroxyapatite (Ca₁₀(PO4)₆-(OH)₂) already mentioned, fluorapatite (Ca,o(PO₄)-oF₂), chlorapatite (Ca₁₀(PO₄)₆C1₂), tricalcium phosphate (Caa(PO₄)₂) and various other kinds of known calcium phosphate based compounds may be employed in the present invention. Such calcium phosphate based compounds can be synthesized by known wet and dry methods.

According to one method for producing the packing material of the present invention, calcium phosphate based particles are mixed with pyrolyzable particles having an average size of from 0.02 to 30 µm, and the mixture is granulated and fired at from 900 to 1,400_{°}C to cause complete combustion of the pyrolyzable particles. In a preferred case, pyrolyzable particles may be added to a slurry of a calcium phosphate based compound that has been synthesized by a wet method the resulting mixture being then spray-dried. It is necessary that the pyrolyzable particles should not undergo thermal decomposition or deterioration during spray drying and heat-resistant resins such as fluorine resins are preferably used as the materials of such pyrolyzable particles. Other heat-resistant resins may of course be used. The pyrolyzable particles are preferably added in amounts raging from 30 to 70 parts by weight per 100 parts by weight of the solids content of the calcium phosphate based compound. If less than 30 parts of weight of the pyrolyzable particles are used, the intended porosity is not attained. If more than 70 parts by weight of the pyrolyzable particles are used, the porosity of the resulting granules is too high to ensure satisfactory strength. For increasing the strength of binding between the granules formed from the sprayed slurry, a binder such as polyvinyl alcohol may be added to the slurry. The resulting granules are then fired at from 900 to 1,400_{°}C to cause complete combustion of the pyrolyzable particles and thereby form porous granules. By adjusting the average size of the pyrolyzable particles to be within the range of from 0.02 to 30 µm, the fired granules can be provided with pores having an average size of 3 µm.

According to another method for producing the packing material of the present invention, a slurry containing calcium phosphate based particles is first provided, and a blowing agent is added to the slurry to form bubbles having an average size of from 0.02 to 30 µm, the foam being then dried to form a porous material which is ground into granules and fired at from 900 to 1,400_{°}C. In this method, the foam comprising the bubbles with an average size of 0.02 to 30 µm that have been formed by addition of the blowing agent is fired to produce open pores having an average pore size of 3 µm. A suitable blowing agent is aqueous hydrogen peroxide or ovalbumin.

The above-described methods for producing the packing material of the present invention are characterized in that even if the firing temperature is elevated to be within the range of from 900 to 1,400_{°}C, the resulting granules have open pores with an average pore size of 3 µm. By employing such high firing temperatures, the crystalline particles of which the calcium phosphate based granules are composed can be provided with an average size in the range of 2 µm.

Therefore, the packing material of the present invention comprises porous calcium phosphate based granules having open pores with an average pore size of 3 µm and the crystalline particles of which these granules are composed have an average size of 2 µm. The packing material having these dimensional features can be used in liquid chromatography for achieving high resolution while exhibiting strong resistance to pressure and dissolution. Granules having open pores with an average pore size of less than 0.01 µm are difficult to produce. On the other hand, if the average pore size of open pores exceeds 20 µm, not only the specific surface area but also the strength of the granules will be decreased. If the crystalline particles of which the granules are composed have an average size of less than 0.1 µm, satisfactory resistance to dissolution is not attainable, and if their average size exceeds 10 µm, it becomes difficult to make porous granules. The particles in the packing material taken as a whole preferably have an average size of from about 1 to about 2,000 µm.

### Example

Two hundred grams of tricalcium phosphate (Wako pure Chemical Industries, Ltd.) was put into a polyethylene bag. After charging 185g of an aqueous solution of 0.5% H₂0₂ into the bag, the contents were well kneaded by hand. The resulting slurry was transferred into a neat resistant container which was placed in a drier with internal air circulation for 24 hours at 100 ° C to obtain a dried foam. The foam was dissipated by hand and passed through a nylon sieve to obtain porous granules of from 10 to 20 µm in size.

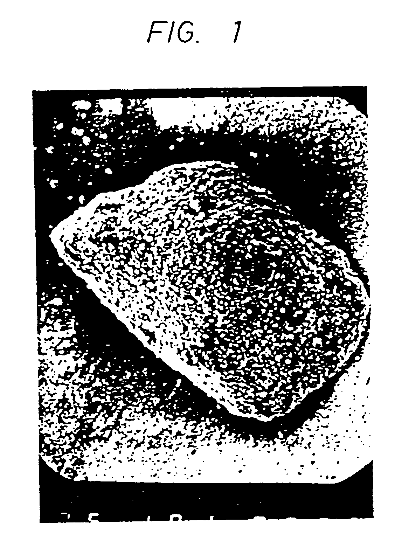

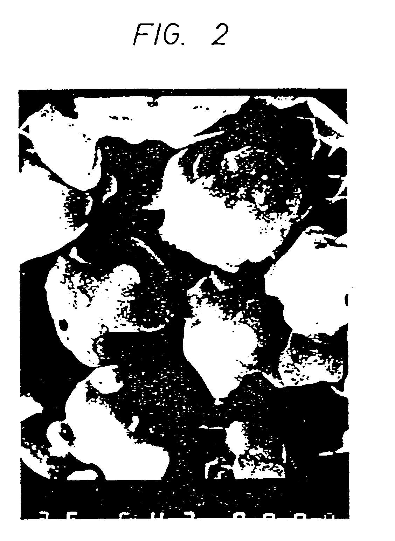

The granules were then fired in an electric furnace under the following conditions: heating up to 700 ° C at a rate of 5 _{°} C/h; subsequent heating from 700 °C to 1,200 ° C at a rate of 100 ° C/h; holding at 1,200_{°}C for 3 hours; and cooling to room temperature at a rate of 200 ° C/h. The resulting porous granules had open pores with an average pore size of 3 µm, with crystalline tricalcium phosphate particles having an average size of 2 µm and a specific surface area of 0.52 m²/g. Electron micrographs of these porous granules are reproduced in Fig. 1 (x100) and Fig. 2 (x 54,000).

A packing material composed of these porous granules was packed in a wet (swollen) state into a stainless steel column 7.5 mm in diameter and 100 mm long; using this column. standard proteins were analyzed by high-performance liquid chromatograph (chromatography, LC-6A of Shimadzu Seisakusho, Ltd.) The conditions and results of the analysis are shown below:
Mobile phase: sodium phosphate buffer solution (pH, 6.8) with a linear gradient of 0.01 - 0.4 (M over 30 min
Flow rate: 1 ml/min
Pressure: 16 kg.cm²
Samples: BSA, lysozyme, and cytochrome C
Number of apparent theoretical plates: 11,000 (based on lysozyme peak)
Durability: 500 cycles.

The results show that the packing material prepared in accordance with the present invention has high resolution and exhibits superior pressure resistance and durability.

As described in the foregoing the packing material of the present invention is composed of porous calcium phosphate based granules having open cells with an average pore size of 3 µm, and the crystalline particles of which the granules are composed have an average size of 2 µm. Because of these dimensional features, the packing material has high resolution and exhibits superior pressure resistance and durability. According to the process for producing this packing material, calcium phosphate based particles are mixed with pyrolyzable particles having an average size of from 0.02 to 30 µm, or a slurry containing calcium phosphate based particles is mixed with a blowing agent to form bubbles having an average size of from 0.02 to 30 µm. In either method, the resulting granules can be fired at from 900 to 1,400 ° C without forming a solidified structure. By selecting a firing temperature within the above-specified range, the crystalline particles of which the granules are composed can be adjusted to have an average size of 2 µm, which serves to impart superior pressure resistance and durability to the porous granules.

## Claims

1. A packing material for liquid chromatography comprising porous calcium phosphate based granules having open pores with an average pore size of 3 µm, said granules being composed of crystalline particles with an average size of 2 µm.

2. A process for producing a packing material for liquid chromatography according to claim 1 that comprises mixing a slurry containing calcium phosphate based particles with pyrolyzable particles having an average size of from 0.02 to 30 µm, granulating the mixture by spray drying, and firing the granulation at from 900 to 1,400 _{°} C to cause complete combustion of the pyrolyzable particles.

3. A process for producing a packing material for liquid chromatography according to claim 1 that comprises providing a slurry containing calcium phosphate particles, adding a blowing agent to the slurry to form bubbles having an average size of from 0.02 to 30 µm, drying the foam to form a porous material, grinding the porous material into granules, and firing the granules at from 900 to 1,400 _{°} C.

4. A process according to claim 3 wherein the blowing agent is aqueous hydrogen peroxide or ovalbumin.

## Patentansprüche

1. Füllmaterial für die Flüssigchromatografie, umfassend auf porösem Kalziumphosphat basierendes Granulat mit offenen Poren, mit einer durchschnittlichen Porengröße von 3µm, wobei das Granulat aus kristallinen Partikeln mit einer durchschnittlichen Größe von 2µm zusammengesetzt ist.

2. Verfahren zur Herstellung eines Füllmaterials für die Flüssigchromatografie gemäß Anspruch 1, das das Mischen einer Aufschlämmung von auf Kalziumphosphat basierenden Partikeln mit einer durchschnittlichen Größe von 0,02 bis 30µm, das Granulieren der Mischung durch Sprühtrocknen und das Brennen des Granulats bei 900 bis 1.400 _{°} C umfaßt unter vollständiger Verbrennung der pyrolisierbaren Partikel.

3. Verfahren zur Herstellung eines Füllmaterials für die Flüssigchromatografie gemäß Anspruch 1, das das Zurverfügungstellen einer Kalziumphosphatpartikel enthaltenden Aufschlämmung, das Zugeben eines Treibmittels zu dieser Aufschlämmung zur Ausbildung von Blasen mit einer durchschnittlichen Größe von 0,02 bis 30µm, das Trocknen des Schaumes zu einem porösen Material, das Mahlen des porösen Materials zu einem Granulat und das Brennen des Granulats bei 900 bis 1.400 _{°} C umfaßt.

4. Verfahren gemäß Anspruch 3, bei dem das Treibmittel wäßriges Wasserstoffperoxid oder Eialbumin ist.

## Revendications

1. Un matériau de garnissage pour chromatographie en phase liquide comprenant des granulés à base de phosphate de calcium poreux ayant des pores ouverts ayant une taille moyenne de pores de 3 um, lesdits granulés étant composés de particules cristallines ayant une taille moyenne de 2 µm.

2. Un procédé de production d'un matériau de garnissage pour chromatographie en phase liquide selon la revendication 1 qui comprend le mélangeage d'une bouillie contenant des particules à base de phosphate de calcium avec des particules pyrolysables ayant une taille moyenne de 0,02 à 30 µm, la granulation du mélange par séchage par pulvérisation et la cuisson des granulés à 900 à 1 400 ° C pour provoquer la combustion complète des particules pyrolysables.

3. Un procédé de production d'un matériau de garnissage pour chromatographie en phase liquide selon la revendication 1 qui consiste à fournir une bouillie contenant des particules de phosphate de calcium, à ajouter un agent gonflant à la bouillie pour former des bulles ayant une taille moyenne de 0,02 à 30 µm, à sécher la mousse pour former un matériau poreux, à broyer le matériau poreux en granulés, et à cuire les granulés à 900 à 1 400 _{°} C.

4. Un procédé selon la revendication 3, selon lequel l'agent gonflant est du peroxyde d'hydrogène aqueux ou l'ovalbumine.
